# EUROPEAN PATENT SPECIFICATION

(11) **EP 3 451 504 B1**
(45) Date of publication and mention of the grant of the patent: **10.05.2023**
(21) Application number: 18198338.8
(22) Date of filing: 07.07.2011
(51) Int. Cl.: H02K 3/12

(54) **STATOR FOR AN ELECTRIC MACHINE**
STATOR FÜR EINE ELEKTRISCHE MASCHINE
STATOR POUR UNE MACHINE ÉLECTRIQUE

(43) Date of publication of application: 06.03.2019
(62) Divisional of application: 11767783.1
(73) Proprietor: Tecnomatic S.p.A., 64013 Corropoli (Teramo) (IT)
(72) Inventor: GUERCIONI, Sante, 64013 Corropoli (Teramo) (IT)
(74) Representative: Carangelo, Pierluigi

(56) References cited:
- FR-A1- 2 841 701
- US-A1- 2008 079 328
- US-B1- 6 459 187

## Description

The present description relates to a stator for an electric machine and more in particular, it relates to a stator as defined in the preamble of claim 1.

It is known to construct stators of electric machines, such as generators or electric motors, for example for applications in hybrid electric vehicles (HEVs), wherein the stator winding is comprised of a plurality of bar conductors bent and variedly interconnected to one another so as to form so-called bar windings.

In particular, bar windings are known in the art, which are made of electric bar conductors having a rectangular cross section, where by rectangular it is meant both the square section and the "flat" section by which it is generally meant a rectangular-shaped section wherein two sides of the section have smaller size than the other two.

Bar conductors that form the bar windings of the prior art typically comprise a plurality of so-called "basic" conductors and a plurality of so-called "special" conductors, such as phase terminals, jumpers, neutral connections, star centres, etc., that is, conductors required for completing the winding.

Basic conductors are usually preformed by "U" or "P" bending starting from rectilinear bar conductors. U.S. patent 7,480,987 describes an exemplary method for preforming basic bar conductors (in this document called "hairpin conductors").

"U" or "P" preformed conductors, also known in the field as "basic preformed conductors", typically exhibit two side by side legs having a different length, each one having an end portion jointed through a connecting portion to the other one of the two legs and an opposite free end portion.

For example, in order to construct a stator, it is known to subject the "U" or "P" preformed bar conductors to two different twisting types.

In a first type of twisting, also called "insertion side twisting", the basic preformed conductors are suitably inserted into special radially aligned pockets made in a twisting device that is suitable for deforming such conductors after the insertion. The twisting device essentially serves for "spreading" the legs of the "U" or "P" shape so that the two legs of a same conductor, after having removed the latter from the twisting device, may then be inserted into slots of a stator core that are radially offset relative to each other by a predetermined pitch.

The patent application published with number US 2009/0178270 describes an example of a twisting method on the insertion side for twisting the preformed bar conductors with even pitch after the insertion thereof into the pockets of a twisting device.

After having been subject to the first type of twisting, the bar conductors are inserted into the slots of the stator core through a first side of the same (so-called "insertion side" or "insertion face") with the respective portions of free end protruding from a second side of the core (so-called "welding side" or "connection side" or "welding face") opposite the first side.

The free end portions protruding on the welding side are then subject to a second type of twisting, also called "twisting on the welding side", for example after having been inserted into pockets made in a proper twisting fixture. The twisting fixture is intended for bending ("twisting") the free end portions of the conductors for suitably shaping such end portions and consequently allowing making the appropriate electric connections between the conductors in order to complete the winding.

The published patent application US 2009/0302705 describes an exemplary twisting method on the welding side of the type discussed above. The method described in such patent application allows performing an uneven twisting of the free end portions of the bar conductors at once.

In the stators with bar winding of the prior art, the free end portions of the basic conductors that protrude from the welding side normally define a plurality of circular layers of conductors concentric to one another that comprise a radially outer end layer and a radially inner end layer relative to the central stator axis.

For various reasons, in the stators with bar windings of the prior art there is felt the need of limiting as much as possible the axial overall dimensions of the parts of the bar winding protruding from the insertion side and from the welding side of the stator core. For example, in particular in the case of applications on vehicles with electric or hybrid drive, the electric machine the stator belongs to is intended for being seated in a space that normally is relatively limited. In particular, the stator is usually intended for being seated in a seat the dimensions whereof are predetermined and imposed by external constraints. Normally, only the phase terminals protrude outside of such seat, so that the appropriate connections to an external load, or to an external power supply source, according to whether the electric machine serves as a motor or as a generator, may be made. The dimensions of said seat being equal, the current trend is to increase the axial extension of the stator core as much as possible so as to increase the performance of the electric machine the stator belongs to. Therefore, the procedure is to minimise the axial overall dimensions of the bar winding parts that protrude axially beyond the stator core (with the exception of the phase terminals that may protrude outside said seat).

A drawback found in the prior art stators relates to the fact that, aiming at having a bar winding with reduced axial overall dimensions as discussed above, the possibilities of constructing the connections between the free end portions of the bar conductors that protrude on the welding side are relatively limited. In fact, the prior art solutions that are suitable for keeping the axial overall dimensions of the stator limited essentially consist in directly welding to one another two free end portions arranged radially adjacent relative to the stator axis and in connecting to one another, through special conductors such as jumpers or star centres, two or more free end portions of the radially outer end layer (or of the radially inner end layer) that are circumferentially spaced from each other by a given extent. The fact that the possibilities of connection between the bar conductors are relatively limited consequently creates constraints that make the management of the connections on the welding side little flexible and that in general, make the design of the bar winding less flexible and thus more difficult.

US2008079328 discloses several embodiments of an AC electric rotating machine with a stator in which multiphase stator coils are wound. In particular US2008079328 discloses coils including same-layer conductor portions and different layer conductor portions. FR2841701 discloses a stator which can be made more compact thanks to a connecting piece.

The object of the present description is to provide a stator for an electrical machine that should allow at least partly obviating the drawbacks discussed above with reference to the prior art.

According to an aspect of the invention, an object of the present description is to provide a stator with bar winding for an electric machine which allows managing the connections between the winding conductors in a more flexible manner compared to the stators of the prior art while maintaining the axial compactness of the winding parts that axially protrude beyond the stator core.

These and other objects are achieved by a stator as defined in the annexed first claim in the most general form thereof and in the dependent claims in some particular embodiments.

The objects of the present invention also are an electric machine as defined in claim 8 and a vehicle with electric or hybrid drive as defined in the annexed claim 9.

The invention will be better understood from the following detailed description of embodiments thereof, made by way of an example and therefore in no way limiting with reference to the annexed drawings, wherein:
- figure 1 shows a perspective view of a stator for an electric machine according to a currently preferred embodiment;
- figure 2 shows a perspective view of the stator of figure 1, wherein in particular the side of the stator opposite the side visible in figure 1 can be seen;
- figure 3 shows a top plan view of the stator of figure 1, seen from the side of figure 2;
- figures 4A-4B show perspective views (view 4A in particular is an almost front view) of an embodiment of a basic bar conductor respectively shown in two different configurations;
- figure 5 shows a perspective view of an embodiment of a first type of special bridge-shaped conductor or jumper;
- figure 6 shows a perspective view of a further embodiment of the first type of jumper of figure 5;
- figure 7 shows a perspective view of an embodiment of a second type of special bridge-shaped conductor or jumper;
- figure 8 shows a perspective view of a further embodiment of the second type of jumper of figure 7;
- figure 9 shows a perspective view of an embodiment of a further type of special conductor, more in particular a star centre or neutral connection conductor; and
- figure 10 shows a perspective view of an embodiment of a further type of special conductor, more in particular a phase terminal.

In the annexed figures, elements which are equivalent or similar will be indicated by the same reference numerals.

For the purposes of the present description, "flat" or "square" bar conductor indicates a bar conductor having four substantially flat sides, each connected to adjacent sides, typically by a rounded edge.

Therefore, the words "flat" or "square" or equivalent words used to describe the cross section of a bar conductor are used in a general meaning and should not be interpreted to exclude the fact that such bar conductors have considerably rounded edges that connect the substantially flat sides. The expression "flat conductor" should be deemed as meaning that the conductor has two opposite sides the distance whereof is greater than the distance between the two remaining opposite sides. For the purposes of the present description, the expression "rectangular conductor" should be deemed as a generalisation of a flat conductor and a square conductor, the square conductor being a special case of rectangular conductor, wherein the four sides have equal dimensions.

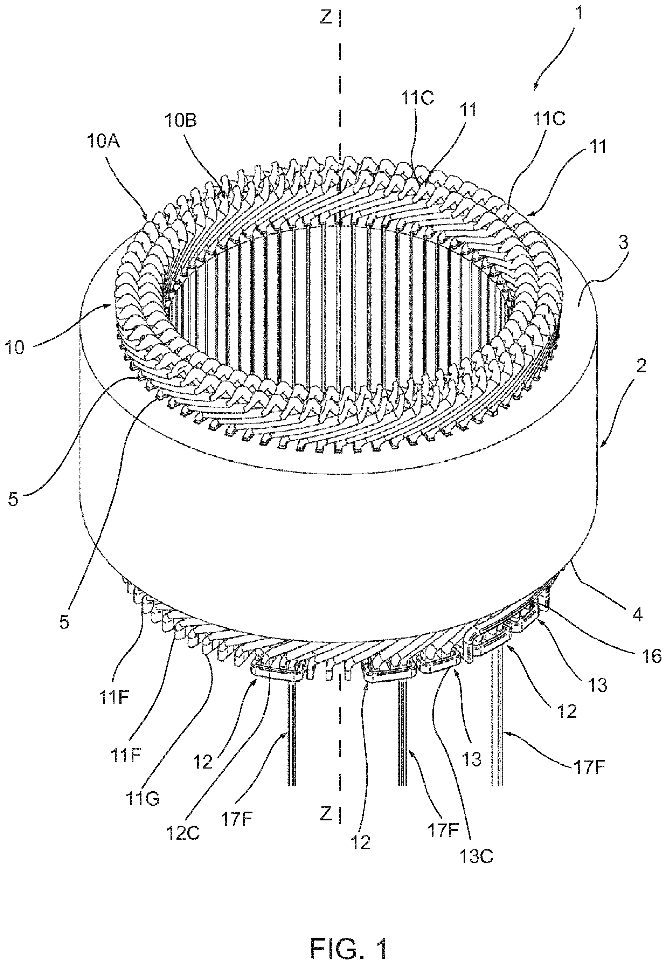

With initial reference to figures 1-3, reference numeral 1 globally indicates a stator according to a currently preferred embodiment. In the example, not limitingly, stator 1 is a stator having three star-connected phases, eight poles and a nominal power of 60kW. For example, stator 1 is the stator of an electric machine such as for example an electric motor, for example for a vehicle with electric or hybrid drive. For example, a stator according to the present description may also be used for auxiliary devices in a vehicle with electric or hybrid drive, for example for a water pump or an oil pump.

It is clear that stator 1 may also be used in an electric machine used as generator or used for alternately performing both the motor function and the generator function. The annexed figures only show the stator of such electric machine as it is deemed that the remaining parts of an electric machine or in general of a vehicle with electric or hybrid drive are widely known to a man skilled in the art.

For simplicity reasons and to keep the description short, a rotor is not described in detail herein since it is deemed that a man skilled in the art, who knows the structure of a rotor well, may envisage the application of the teachings of the present description to a rotor with no difficulties.

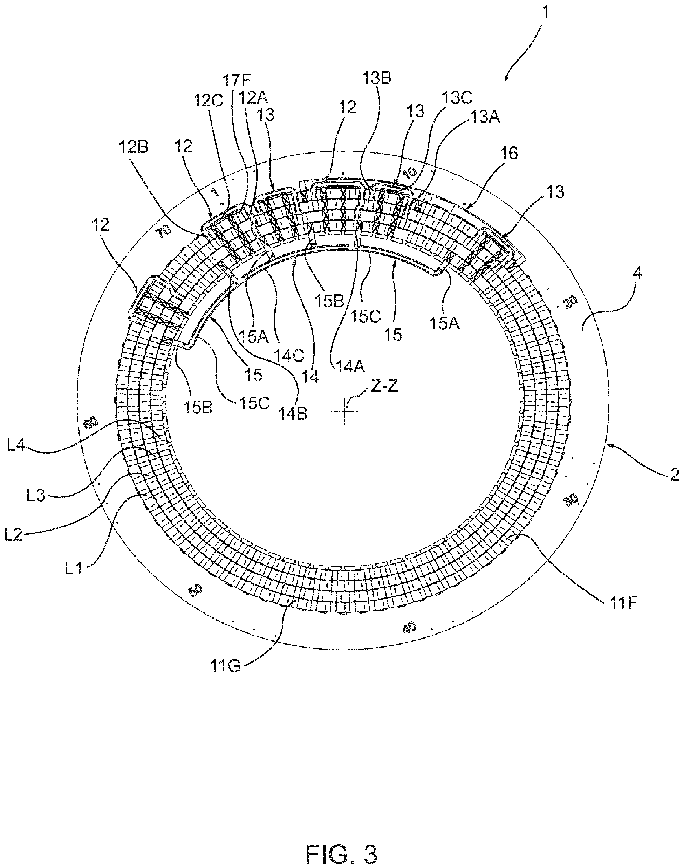

Always with reference to figures 1-3, stator 1 comprises a stator core 2. As may be seen in the figures, according to an embodiment the stator core 2 comprises, in a per se known manner, a main tubular laminar body with a generally cylindrical shape, for example made of a magnetic material, which extends about a stator axis Z-Z (in figure 3, the stator axis Z-Z is orthogonal to the plane of the figure and is schematically indicated by a cross). Preferably, the stator axis Z_Z coincides with the central symmetry axis of the main body of the stator core 2. The main body of the stator core 2 extends axially (axis Z-Z) between a first and a second face 3, 4 opposite to one another, which are respectively called insertion face 3 and welding face 4. It should be noted that for the purposes of the present description, the terms "axial", "radial" and "circumferential" are to be intended as referred to the stator axis Z-Z. More in particular, the terms "radial" and "circumferential" are to be intended as referred to a virtual circumference lying on a plane orthogonal to the stator axis Z-Z and having the respective centre on the stator axis Z-Z.

The main body of the stator core 2 comprises a circular array of slots 5 that extend between faces 3, 4 and that are distributed around the stator axis Z-Z. In the example, the main body of the stator core 2 comprises, not limitingly, seventy-two slots 5 that axially extend into the thickness of the main body and that are angularly evenly spaced around the stator axis Z-Z.

As may be seen in the figures, stator 1 comprises a bar winding that is globally indicated with reference numeral 10. According to an embodiment, winding 10 comprises a plurality of basic conductors 11 and a plurality of special conductors 12, 13, 14, 15, 16, 17 that are interconnected to one another for forming the bar winding 10. As is known, these last mentioned bar conductors 12-17 represent so-called "special" elements or conductors, provided for completing winding 10. To this end, it should be noted that in the present description, the expression "basic conductors" is only used to identify conductors that are not special elements or conductors of the type described above, that is, that are not specifically provided for the functional completion of the winding.

According to an embodiment, said bar conductors 11-17 are copper conductors and are rectangular conductors, and more preferably flat conductors, as they exhibit a pair of opposite faces that are away from each other more than the two remaining opposite faces.

According to an embodiment, winding 10 comprises two concentric winding sets 10A, 10B that are interconnected to one another. As may be seen in figure 1, in the example the winding sets 10A, 10B have an essentially circular shape and each comprises a plurality of basic conductors 11. However, it should be noted that in general winding 10 may comprise a number of concentric winding sets other than two, for example a number of winding sets that is larger or smaller than two according to the technical specifications required for winding 10.

According to an embodiment, the special conductors comprise a plurality of bridge-shaped conductors 12, 13, 14, 15, or jumpers 12, 13, 14, 15, a plurality of phase terminals 17 and a neutral connection 16, or star centre 16. It is clear, however, that the number and type of special conductors used, as well as the number of basic conductors, may vary in general according to the specific winding to be made.

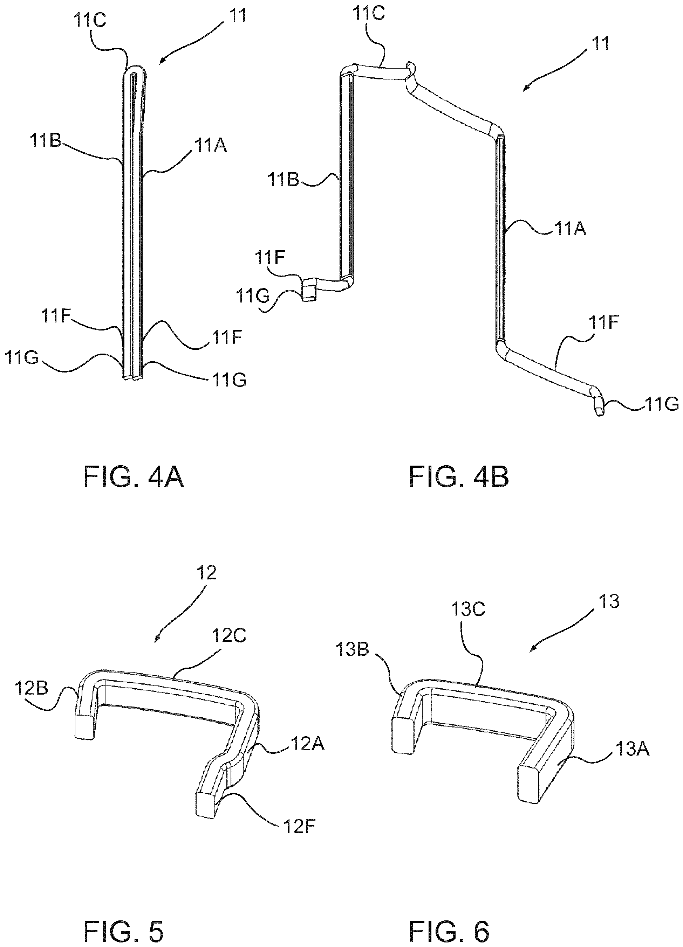

Figures 4A and 4B show an embodiment of a basic conductor 11 respectively in two different configurations. In particular in figure 4A, the basic conductor 11 is shown in the respective configuration substantially preformed as a "P". In this configuration, conductor 11 is often also called "basic preformed conductor". In figure 4B, the basic conductor 11 is shown in the essentially final configuration thereof in stator 1 (that is, the configuration taken in figures 1-3), after having been subject for example to a twisting on the insertion side and to a twisting on the welding side. As may be seen in figures 4A, 4B, each one of the basic conductors 11 comprises two basic conductor legs 11A, 11B and a basic conductor connecting portion 11C (in the field also called "head portion") between legs 11A, 11B. Each leg 11A, 11B has an end portion connected to the connecting portion 11C and an opposite free end portion 11F.

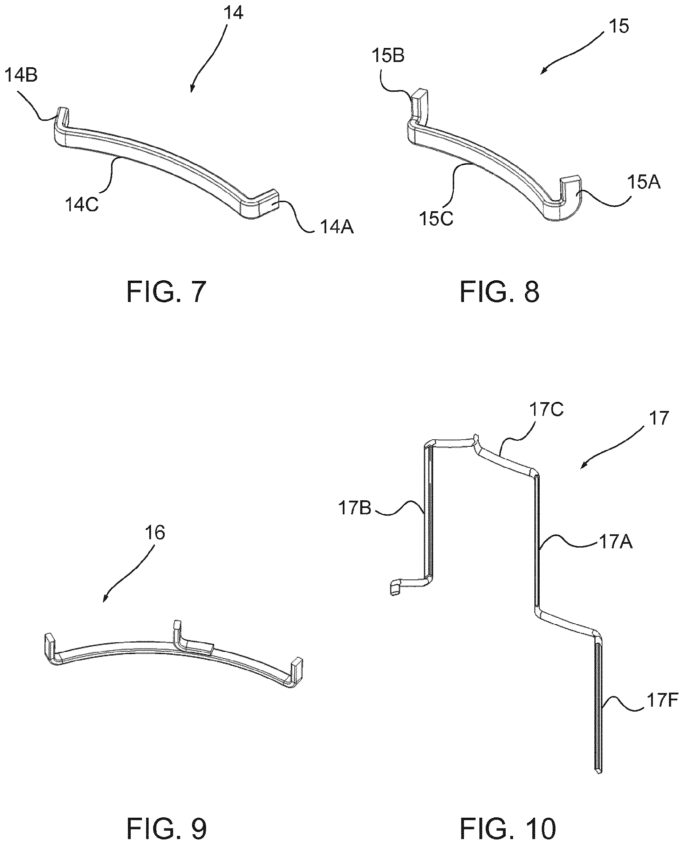

In that regard, with reference to figure 10, it may be seen that such figure shows an embodiment of a phase terminal 17 in the essentially final configuration thereof in stator 1 (that is, the configuration taken in figures 1-3 in the example). In particular, it can be noted that also the phase terminal 17 comprises a first and a second terminal leg 17A, 17B and a terminal connecting portion 17C between such legs 17A, 17B. More in particular, the terminal leg 17A, that is, the longer terminal leg of arms 17A, 17B, exhibits an end portion connected to the terminal connecting portion 17C and an opposite free terminal end portion 17F. The essentially final configuration of the phase terminal 17 shown in figure 10 is obtained in the example starting from an initial configuration of such terminal similar to that of the basic conductor 11 shown in figure 4A, but wherein the difference in length between legs 17A, 17B is considerably greater compared to the difference in length between legs 11A, 11B of the basic preformed conductor 11 of figure 4A. The configuration of figure 10 may for example be obtained by subjecting terminal 17 to a twisting on the insertion side and to a twisting on the welding side starting from the respective initial configuration mentioned above.

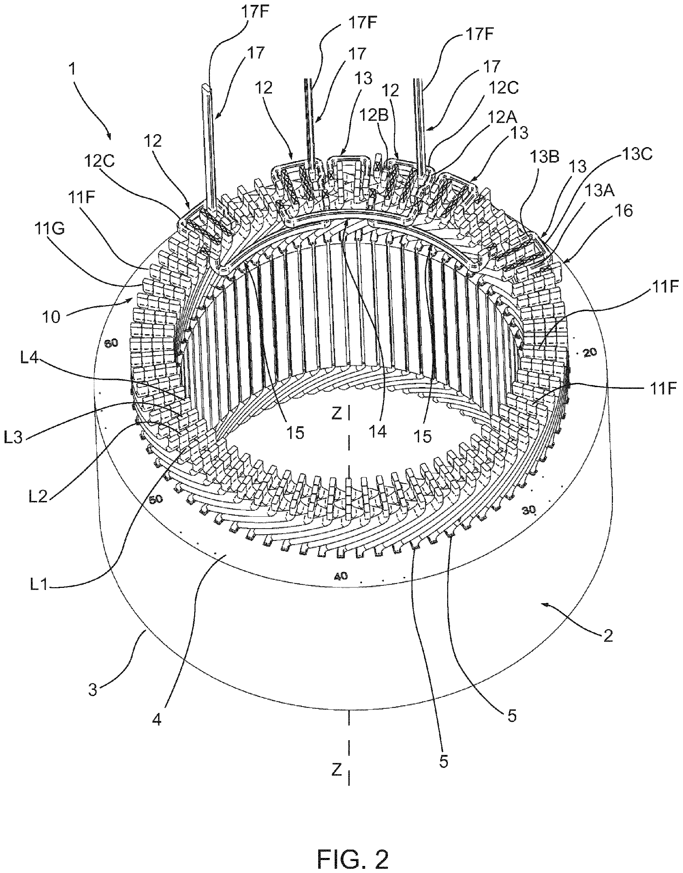

With reference to figure 2, it can be seen that the basic conductors 11 are inserted into the stator slots 5 with the free end portions 11F protruding from the welding face 4. The end portions 11F define a plurality of circular conductor layers L1, L2, L3, L4 concentric to one another. Such conductor layers L1, L2, L3, L4, in the example four layers L1, L2, L3, L4, comprise a radially outer circular end layer L1 and a radially inner circular end layer L4.

According to an embodiment, the above conductor layers L1-L4 comprise, in a sequence and starting from the radially outer end layer L1 up to the radially inner end layer L4, a first L1, a second L2, a third L3 and a fourth L4 circular conductor layer.

According to the invention, the conductor layers L1-L4 include a first set of free end portions 11F bent by a first pitch and a second set of free end portions 11F bent by a second pitch differing from the first pitch. According to an embodiment, each one of layers L1, L2, L3, L4 comprises free end portions 11F bent by the first pitch and end portions 11F bent by the second pitch.

In figures 2 and 3, in order to make a distinction between the free end portions 11F bent by the first pitch and those bent by the second pitch, the free end portions 11F bent by the first pitch are marked with "X" on the respective rectangular end surfaces. Moreover, it should be noted that for the purposes of the present description, the expressions "bent by a first pitch" and "bent by a second pitch" referred to the free end portions 11F are to be intended in that such end portions are bent so as to extend in the in the circumferential direction by a predetermined number of slots or by a predetermined angle around the stator axis Z-Z. In the present example, but without introducing any limitations thereby, the end portions 11F of said first set (that is, the portions bent by the first pitch and marked with "X" in figures 2 and 3) extend by an angle of 20° about the stator axis Z-Z, in particular corresponding to an extension along four stator slots 5 consecutive to one another. The end portions 11F of said second set (that is, those bent by the second pitch and not marked with "X"), on the other hand, extend by an angle of 22.5° about the stator axis Z-Z, in particular corresponding to an extension along four and a half stator slots. In other words, in the example the free end portions 11F of the first set are bent by a first pitch whereas the free end portions 11F of the second set are bent by a second pitch that is greater than the first pitch. According to a preferred embodiment, the end portions 11F may be bent by the first and by the second pitch through a twisting fixture and/or a twisting method as described in patent application number PCT/IT2011/000004 that currently is under secrecy.

According to an embodiment, the free end portions 11F of two adjacent layers L1-L4 are bent circumferentially in opposite directions. In particular in the example, the end portions 11F of layers L1 and L3 are bent in a given direction about the stator axis Z-Z whereas the end portions 11F of layers L2 and L4 are bent about the stator axis in an opposite direction relative to said given direction. As is known, the free end portions 11F are bent circumferentially so that the end parts 11G of the free end portions 11F may be arranged in predetermined positions about the stator axis Z-Z to perform the appropriate electric connections between the conductors of winding 10.

According to a preferred embodiment, the special conductors 12-17 comprise a plurality of jumpers of a first type 12, 13 and a plurality of jumpers of a second type 14, 15. However, it should be noted that according to a further, less preferred embodiment (not shown in the figures), the jumpers of the second type 14, 15 may also be not provided.

As is known, jumpers generally are bridge-shaped elements or bridge-shaped conductors typically used for connecting two basic bar conductors of the bar winding to one another so as to obtain electric connections, for example between poles, phases, winding sets, etc. In particular, as may be seen in the annexed figures, each jumper of the first type 12, 13 and each jumper of the second type 14, 15 connects to one another two free end portions 11F, and more preferably two of said end parts 11G, which are radially offset relative to one another and which respectively belong to two separate basic conductors 11. The main difference between the jumpers of the first and the second type lies in that each jumper of the first type 12, 13 connects to one another two free end portions 11F belonging to two of layers L1-L4 that are separate from one another, whereas each jumper of the second type 14, 15 connects to one another two free end portions 11F belonging to a same layer of the conductor layers L1-L4. As may be seen for example in figures 2 and 3, according to an embodiment jumpers of the first type 12, 13 are generally smaller than the jumpers of the second type 14, 15. For this reason, the jumpers of the first type are in that case also called "mini jumpers".

With reference to figures 5 and 6, each jumper of the first type 12, 13 comprises a first jumper arm 12A, 13A, a second jumper arm 12B, 13B and a jumper jointing portion 12C, 13C between the respective jumper arms 12A, 12B and 13A, 13B.

According to an embodiment, the jumpers of the first type may comprise a plurality of jumpers having shapes differing from one another. In particular, as may be seen in the figures, in the example jumpers 12 differ from jumpers 13 essentially in the shape of the respective arms.

According to a preferred embodiment, each jumper of the first type 12, 13 has the first jumper arm 12A, 13A connected to a free end portion 11F belonging to one between the second and the third layer L2, L3 and has the second jumper arm 12B, 13B connected to a free end portion 11F belonging to the other between the second and the third layer L2, L3. As may be seen in figures 2 and 3, in the example the first and the second jumper arm 12A, 13A, and 12B, 13B of each jumper 12, 13 are connected respectively to a free end portion 11F of the third layer L3 and to a free end portion 11F of the second layer L2. More in particular, as may be seen for example in figures 2 and 3, each jumper of the first type 12, 13 has the first jumper arm 12A, 13A and the second jumper arm 12B, 13B that extent each in a respective passage defined in said conductor layers L1-L4 for connecting to the respective free end portions 11F. As may be seen for example in figure 3, each of such passages extends in radial or substantially radial direction between the conductor layers L1-L4. Moreover, the jumper jointing portion 12C, 13C of each jumper 12, 13 is extended radially outer relative to the radially outer end layer L1 for passing about a group of free end portions 11F. As may be seen for example in figure 3, according to an embodiment, the first jumper arm 12A, 13A and the second jumper arm 12B, 13B of each jumper 12, 13 have a mainly radial or essentially radial extension direction. More in general, it may be sufficient that at least one between the first jumper arm 12A, 13A and the second jumper arm 12B, 13B of each jumper 12, 13 has a mainly radial or essentially radial extension direction so as to pass through one or more of layers L1-L4. Moreover, the jointing portions 12C, 13C of each jumper 12, 13 preferably have a mainly circumferential or essentially circumferential extension direction.

As may be seen in figures 2 and 3, according to a preferred embodiment, each jumper 12, 13 is arranged so as to turn around a group of free end portions 11F that are bent by said first pitch and that are arranged consecutive and circumferentially adjacent to one another. Moreover, each pair of jumper arms 12A, 12B and 13A, 13B of each jumper 12, 13 is connected to a respective pair of free end portions 11F that are bent by said second pitch.

According to a preferred embodiment, besides turning around said group of end portions bent by the first pitch, each jumper 12 also turns around a phase terminal end portion 17F that protrudes from the welding face 4 of the stator when the phase terminal 17 is inserted into slots 5 of the stator. In that case, at least one between the jumper arms 12A, 12B preferably exhibits a jumper arm end portion 12F (figure 5) that is bent for passing around the end portion 17F of the phase terminal 17 and for connecting to the respective free end portion 11F.

It should be noted that in the example, each of the conductor layers L1-L4 comprises at least one group of free end portions 11F that are bent by the first pitch and that are arranged consecutive and circumferentially adjacent to one another (one such group consists for example of two circumferentially adjacent free end portions 11F). However, according to an embodiment, it is sufficient that at least one of layers L1-L4 comprises a group of free end portions 11F bent by the first pitch and that are arranged consecutive and circumferentially adjacent to one another. In this latter case, such group of end portions preferably belongs to the radially outer end layer L1.

Moreover, it should be noted that while in the example each jumper 12, 13 is arranged so as to turn around a group of free end portions 11F, in general it is sufficient for each jumper 12, 13 to pass around at least one of the free end portions 11F belonging to the radially outer end layer L1.

Moreover, it should be noted that according to further embodiments, the jumper arms 12A, 12B and 13A, 13B may connect free end portions 11F belonging to conductor layers differing from layers L2, L3 as described above. For example, the arms of each jumper 12, 13 may connect free end portions 11F of the first and of the fourth layer L1, L4 or of the first and of the third layer L1, L3. Therefore, in general it is not strictly necessary for both jumper arms 12A, 12B and 13A, 13B of each jumper 12, 13 to extend in a respective passage defined in layers L1-L4. In other words, in general it is sufficient that at least one between jumper arms 12A, 12B and 13A, 13B of each jumper 12, 13 extends in a respective passage defined in layers L1-L4 for connecting to the respective free end portion 11F.

With reference now to figures 7 and 8, such figures show two embodiments of jumpers of the above second type 14, 15. In particular, according to an embodiment, the jumpers of the second type 14, 15, comprise each two jumper arms, respectively 14A, 14B and 15A, 15B, and a jumper connecting portion 14C, 15C between the respective jumper arms. In the example, the jumpers of the second type 14, 15 have shapes differing from one another. In particular, as may be seen in figures 7 and 8, in the example jumpers 14 differ from jumpers 15 essentially in the shape of the respective jumper arms.

Going back to figures 2 and 3, it may be seen that the jumpers of the second type 14, 15 are arranged on a side of the bar winding 10 that is radially opposite to that of the jumpers of the first type 12, 13. In other words, in the present example jumpers 12, 13 are arranged radially outer whereas jumpers 14, 15 are arranged radially inner relative to jumpers 12, 13. However, according to an embodiment, the positions of jumpers 12, 13 and of jumpers 14, 15 may also be reversed compared to those shown in the figures. In other words, jumpers 12, 13 may be arranged radially inner and jumpers 14, 15 may be arranged radially outer relative to jumpers 12, 13. In that case, it is clear that jumpers 12, 13 will be arranged so as to turn around at least one free end portion 11F of the radially inner end layer L4 rather than turning around at least one free end portion 11F of the radially outer end layer L1 as described above.

According to an embodiment, each jumper of the second type 14, 15 has the respective arms 14A, 14B and 15A, 15B that are respectively connected to two free end portions of the radially inner end layer L4. In particular, according to an embodiment, jumpers 14, 15 connect free end portions 11F bent by said first pitch to one another. In the example, the jumper connecting portions 14C, 15C are extended radially inner relative to the radially inner end layer L4. In particular, as may be seen in figures 2 and 3, according to an embodiment jumpers 14 and 15 are arranged crossed to one another. In particular, jumpers 15 are arranged so as to have a respective jumper arm that is interposed between the jumper connecting portion 14C of jumper 14 and the radially inner end layer L4 for connecting to the respective free end portion 11F. Moreover, the connecting portions 14C, 15C of jumpers 14, 15 preferably are partly overlapped to one another. According to a preferred embodiment, in order to allow a crossed arrangement of jumpers 14, 15, jumpers 15 comprise at least one jumper arm having a shape essentially as an "L" that extends in a plane of the bundle of planes passing by the stator axis Z-Z.

Based on the above description, it is therefore possible to understand how a stator for an electric machine according to the present invention allows achieving the objects mentioned above.

In fact, thanks to the fact of providing at least one jumper of a first type that exhibits two jumper arms connected to the free end portions of two circular conductor layers separate from one another, where such jumper passes around at least one free end portion of the radially outer end layer (or it passes around at least one free end portion of the radially inner end layer) and has at least one arm that extends in a passage defined in the conductor layers, it is possible to make connections between free end portions belonging to separate conductor layers without having such jumper axially protrude beyond the free end portions of the basic conductors. In this way it is therefore possible to make the design and the management of the connections of the bar winding more flexible while maintaining the axial compactness of the bar winding parts that axially protrude from the stator core.

The principle of the invention being understood, the manufacturing details and the embodiments may widely vary compared to what described and illustrated by way of a non-limiting example only, without departing from the scope of the invention as defined in the annexed claims.

## Claims

1. Stator (1) for an electric machine comprising:
- a stator core having a first and a second face opposite to one another (3, 4), the second face being the welding face of the stator core, and a circular array of stator slots (5) extending between said faces (3, 4) and being distributed around a stator axis (Z-Z); and
- a bar winding (10) comprising a plurality of basic conductors (11) and a plurality of special conductors (12, 13, 14, 15, 16, 17) interconnected to one another for forming the bar winding (10);
wherein each basic conductor (11) comprises two basic conductor legs (11A, 11B) and a basic conductor connecting portion (11C) between said legs (11A, 11B), each basic conductor leg (11A, 11B) having an end portion connected to the basic conductor connecting portion (11C) and an opposite free end portion (11F),
wherein the basic conductors (11) are inserted in the stator slots (5) with the free end portions (11F) protruding from said second face (4), the free end portions (11F) defining a plurality of circular conductor layers (L1, L2, L3, L4) concentric to one another comprising a radially outer circular end layer (L1) and a radially inner circular end layer (L4),
wherein the special conductors (12, 13, 14, 15, 16, 17) comprise a jumper (12; 13) of a first type having a first and a second jumper arm (12A, 12B; 13A, 13B) respectively connected to two of said free end portions (11F), and a jumper jointing portion (12C; 13C) between said jumper arms (12A, 12B; 13A, 13B),
wherein the jumper jointing portion (12C; 13C) extends radially outer with respect to said radially outer end layer (L1), or radially inner with respect to said radially inner end layer (L4), for passing around at least one of the free end portions (11F) respectively of the radially outer end layer (L1) or of the radially inner end layer (L4); and
said stator (1) being **characterised in that** the jumper of said first type (12; 13) is arranged so that:
- the two free end portions (11F) to which the first and the second jumper arms (12A, 12B; 13A, 13B) are connected respectively belong to two of said conductor layers (L1, L2, L3, L4) separate from one another; and
- at least one between the first and the second jumper arms (12A, 12B; 13A, 13B) extends in a respective passage defined in said conductor layers (L1, L2, L3, L4) for connecting to the respective free end portion (11F);
wherein said conductor layers (L1, L2, L3, L4) include a first set of free end portions (11F) circumferentially bent by a first pitch and a second set of free end portions (11F) circumferentially bent by a second pitch differing from the first pitch.

2. Stator (1) according to claim 1, wherein also the other one between the first and the second jumper arms (12A, 12B; 13A, 13B) extends in a respective passage defined in said conductor layers (L1, L2, L3, L4) for connecting to the respective free end portion (11F).

3. Stator (1) according to claim 2, wherein said conductor layers (L1, L2, L3, L4) comprise, consecutively and starting from said radially outer end layer (L1) up to said radially inner end layer (L4), a first (L1), a second (L2), a third (L3) and a fourth (L4) circular conductor layer, and wherein the free end portion (11F) whereto the first jumper arm (12A; 13A) is connected belongs to one between said second and third layer (L2, L3) and the free end portion (11F) whereto the second jumper arm (12B, 13B) is connected belongs to the other one between said second and third layer (L2, L3).

4. Stator (1) according to any one of the previous claims, wherein at least one of said conductor layers (L1, L2, L3, L4) comprises a group of free end portions (11F) bent by said first pitch that are arranged consecutive and circumferentially adjacent to one another; the jumper of said first type (12; 13) turning around said group of free end portions (11F), and said free end portions (11F) whereto the first and the second jumper arm (12A, 12B; 13A, 13B) are connected being bent by said second pitch.

5. Stator (1) according to claim 4, wherein the special conductors (12, 13, 14, 15, 16, 17) further comprise a phase terminal (17) inserted in said stator slots (5) and having a phase terminal end portion (17F) that protrudes from the second face (4) of the stator, the jumper of the first type (12; 13) also turning around the phase terminal end portion (17F), and at least one between the first and the second jumper arm (12A, 12B; 13A, 13B) having a respective jumper arm end portion (12F) that is bent for passing around said phase terminal end portion (17F) and for connecting to the respective free end portion (11F).

6. Stator (1) according to any one of the previous claims, comprising a plurality of jumpers of said first type (12; 13).

7. Stator (1) according to any one of the previous claims, wherein the special conductors (12, 13, 14, 15, 16, 17) comprise a plurality of jumpers of a second type (14; 15) that are arranged on a side of the bar winding (10) that is radially opposite relative to that of the jumper of the first type (12; 13),
wherein each jumper of the second type (14; 15) has two jumper arms (14A, 14B; 15A, 15B) and a jumper connecting portion (14C; 15C) between said jumper arms (14A, 14B; 15A, 15B), the two jumper arms (14A, 14B; 15A, 15B) of each jumper of the second type (14; 15) being respectively connected to two of said free end portions (11F) that belong to a same layer of said plurality of layers (L1, L2, L3, L4), and
wherein the jumpers of the second type (14; 15) of said plurality are arranged crossed to one another.

8. Electric machine comprising a stator (1) as defined in any one of the previous claims.

9. Electric or hybrid drive vehicle comprising a stator (1) as defined in any one of the previous claims or an electric machine as defined in claim 8.

## Patentansprüche

1. Stator (1) für eine elektrische Maschine, umfassend:
- einen Statorkern, der eine erste und eine zweite Fläche aufweist, die einander gegenüberliegen (3, 4), wobei die zweite Fläche die Schweißfläche des Statorkerns ist, und eine kreisförmige Anordnung von Statorschlitzen (5), die sich zwischen den Flächen (3, 4) erstrecken und um eine Statorachse (Z-Z) verteilt sind; und
- eine Stabwicklung (10), die eine Vielzahl von Basisleitern (11) und eine Vielzahl von miteinander verbundenen speziellen Leitern (12, 13, 14, 15, 16, 17) zum Bilden der Stabwicklung (10) umfasst,
wobei jeder Basisleiter (11) zwei Basisleiterschenkel (11A, 11B) und einen Basisleiter-Verbindungsabschnitt (11C) zwischen den Schenkeln (11A, 11B) umfasst, wobei jeder Basisleiterschenkel (11A, 11B) einen Endabschnitt aufweist, der mit dem Basisleiter-Verbindungsabschnitt (11C) und einem gegenüberliegenden freien Endabschnitt (11F) verbunden ist,
wobei die Basisleiter (11) in die Statorschlitze (5) eingesetzt sind, die freien Endabschnitte (11F) von der zweiten Fläche (4) vorstehen, die freien Endabschnitte (11F) eine Vielzahl von zueinander konzentrischen, kreisförmigen Leiterschichten (L1, L2, L3, L4) definieren, die eine radial äußere kreisförmige Endschicht (L1) und eine radial innere kreisförmige Endschicht (L4) umfassen,
wobei die speziellen Leiter (12, 13, 14, 15, 16, 17) eine Überbrückung (12; 13) eines ersten Typs umfassen, die einen ersten und einen zweiten Überbrückungsarm (12A, 12B; 13A, 13B) aufweist, die jeweils mit zwei der freien Endabschnitte (11F) verbunden sind, und einen Überbrückungs-Verbindungsabschnitt (12C; 13C) zwischen den Überbrückungsarmen (12A, 12B; 13A, 13B),
wobei sich der Überbrückungs-Verbindungsabschnitt (12C; 13C) in Bezug auf die radial äußere Endschicht (L1) radial nach außen oder in Bezug auf die radial innere Endschicht (L4) radial nach innen erstreckt, um um mindestens einen der freien Endabschnitte (11F) der radial äußeren Endschicht (L1) bzw. der radial inneren Endschicht (L4) zu verlaufen; und
wobei der Stator (1) **dadurch gekennzeichnet ist, dass** die Überbrückung des ersten Typs (12; 13) so angeordnet ist, dass:
- die zwei freien Endabschnitte (11F), mit denen der erste und der zweite Überbrückungsarm (12A, 12B; 13A, 13B) verbunden sind, jeweils zu zwei der Leiterschichten (L1, L2, L3, L4) gehören, die voneinander getrennt sind; und
- mindestens einer zwischen dem ersten und dem zweiten Überbrückungsarm (12A, 12B; 13A, 13B) sich in einem jeweiligen Durchgang, der in den Leiterschichten (L1, L2, L3, L4) definiert ist, zum Verbinden mit dem jeweiligen freien Endabschnitt (11F) erstreckt;
wobei die Leiterschichten (L1, L2, L3, L4) einen ersten Satz von freien Endabschnitten (11F), die in Umfangsrichtung mit einer ersten Neigung gebogen sind, und einen zweiten Satz von freien Endabschnitten (11F) einschließen, die in Umfangsrichtung mit einer zweiten Neigung gebogen sind, die sich von der ersten Neigung unterscheidet.

2. Stator (1) nach Anspruch 1, wobei sich auch der andere zwischen dem ersten und dem zweiten Überbrückungsarm (12A, 12B; 13A, 13B) in einem jeweiligen Durchgang, der in den Leiterschichten (L1, L2, L3, L4) definiert ist, zum Verbinden mit dem jeweiligen freien Endabschnitt (11F) erstreckt.

3. Stator (1) nach Anspruch 2, wobei die Leiterschichten (L1, L2, L3, L4) fortlaufend und beginnend von der radial äußeren Endschicht (L1) bis zur radial inneren Endschicht (L4) eine erste (L1), eine zweite (L2), eine dritte (L3) und eine vierte (L4) kreisförmige Leiterschicht umfassen, und wobei der freie Endabschnitt (11F), mit dem der erste Überbrückungsarm (12A; 13A) verbunden ist, zu einer zwischen der zweiten und dritten Schicht (L2, L3) gehört, und der freie Endabschnitt (11F), mit dem der zweite Überbrückungsarm (12B, 13B) verbunden ist, zu der anderen zwischen der zweiten und dritten Schicht (L2, L3) gehört.

4. Stator (1) nach einem der vorhergehenden Ansprüche, wobei mindestens eine der Leiterschichten (L1, L2, L3, L4) eine Gruppe von freien Endabschnitten (11F) umfasst, die mit der ersten Neigung gebogen sind, die aufeinanderfolgend und in Umfangsrichtung benachbart zueinander angeordnet sind; wobei sich die Überbrückung des ersten Typs (12; 13) um die Gruppe von freien Endabschnitten (11F) dreht, und wobei die freien Endabschnitte (11F), mit denen der erste und der zweite Überbrückungsarm (12A, 12B; 13A, 13B) verbunden sind, mit der zweiten Neigung gebogen sind.

5. Stator (1) nach Anspruch 4, wobei die speziellen Leiter (12, 13, 14, 15, 16, 17) ferner einen Phasenanschluss (17) umfassen, der in die Statorschlitze (5) eingesetzt ist, und einen Phasenanschluss-Endabschnitt (17F) aufweisen, der von der zweiten Fläche (4) des Stators vorsteht, wobei sich die Überbrückung des ersten Typs (12; 13) auch um den Phasenanschluss-Endabschnitt (17F) dreht, und mindestens einer zwischen dem ersten und dem zweiten Überbrückungsarm (12A, 12B; 13A, 13B) einen jeweiligen Überbrückungsarm-Endabschnitt (12F) aufweist, der gebogen ist, um um den Phasenanschluss-Endabschnitt (17F) herum zu verlaufen und um mit dem jeweiligen freien Endabschnitt (11F) verbunden zu werden.

6. Stator (1) nach einem der vorhergehenden Ansprüche, der eine Vielzahl von Überbrückungen des ersten Typs (12; 13) umfasst.

7. Stator (1) nach einem der vorhergehenden Ansprüche, wobei die speziellen Leiter (12, 13, 14, 15, 16, 17) eine Vielzahl von Überbrückungen eines zweiten Typs (14; 15) umfassen, die auf einer Seite der Stabwicklung (10) angeordnet sind, die relativ zu derjenigen der Überbrückung des ersten Typs (12; 13) radial gegenüberliegend ist,
wobei jede Überbrückung des zweiten Typs (14; 15) zwei Überbrückungsarme (14A, 14B; 15A, 15B) und einen Überbrückungs-Verbindungsabschnitt (14C; 15C) zwischen den Überbrückungsarmen (14A, 14B; 15A, 15B) aufweist, wobei die zwei Überbrückungsarme (14A, 14B; 15A, 15B) jeder Überbrückung des zweiten Typs (14; 15) jeweils mit zwei der freien Endabschnitte (11F) verbunden sind, die zu einer gleichen Schicht der Vielzahl von Schichten (L1, L2, L3, L4) gehören, und
wobei die Überbrückungen des zweiten Typs (14; 15) der Vielzahl zueinander gekreuzt angeordnet sind.

8. Elektrische Maschine, die einen Stator (1) umfasst, wie in einem der vorhergehenden Ansprüche definiert.

9. Elektro- oder Hybridantriebsfahrzeug, das einen Stator (1) umfasst, wie in einem der vorhergehenden Ansprüche definiert, oder eine elektrische Maschine, wie in Anspruch 8 definiert.

## Revendications

1. Stator (1) pour machine électrique comprenant :
- un noyau de stator ayant une première et une seconde face opposées l'une à l'autre (3, 4), la seconde face étant la face de soudage du noyau de stator, et un réseau circulaire d'encoches de stator (5) s'étendant entre lesdites faces (3, 4) et étant réparties autour d'un axe de stator (Z-Z) ; et
- un enroulement de barre (10) comprenant une pluralité de conducteurs de base (11) et une pluralité de conducteurs spéciaux (12, 13, 14, 15, 16, 17) interconnectés les uns aux autres pour former l'enroulement de barre (10) ;
dans lequel chaque conducteur de base (11) comprend deux branches (11A, 11B) de conducteur de base et une partie de connexion (11C) de conducteur de base entre lesdites branches (11A, 11B), chaque branche (11A, 11B) de conducteur de base ayant une partie d'extrémité connectée à la partie de connexion (11C) de conducteur de base et une partie d'extrémité libre (11F) opposée,
dans lequel les conducteurs de base (11) sont insérés dans les encoches de stator (5) avec les parties d'extrémité libres (11F) faisant saillie de ladite seconde face (4), les parties d'extrémité libres (11F) définissant une pluralité de couches conductrices circulaires (L1, L2, L3, L4) concentriques les unes aux autres comprenant une couche d'extrémité circulaire radialement externe (L1) et une couche d'extrémité circulaire radialement interne (L4),
dans lequel les conducteurs spéciaux (12, 13, 14, 15, 16, 17) comprennent un cavalier (12 ; 13) d'un premier type ayant un premier et un second bras de cavalier (12A, 12B ; 13A, 13B) connectés respectivement à deux desdites parties d'extrémité libres (11F) et une partie de jonction de cavalier (12C ; 13C) entre lesdits bras de cavalier (12A, 12B ; 13A, 13B),
dans lequel la partie de jonction de cavalier (12C ; 13C) s'étend radialement à l'extérieur par rapport à ladite couche d'extrémité radialement externe (L1) ou radialement à l'intérieur par rapport à ladite couche d'extrémité radialement interne (L4), pour passer autour d'au moins l'une des parties d'extrémités libres (11F) respectivement de la couche d'extrémité radialement externe (L1) ou de la couche d'extrémité radialement interne (L4) ; et
ledit stator (1) étant **caractérisé en ce que** le cavalier dudit premier type (12 ; 13) est agencé de sorte que :
- les deux parties d'extrémité libres (11F) auxquelles sont connectés le premier et le second bras de cavalier (12A, 12B ; 13A, 13B) appartiennent respectivement à deux desdites couches conductrices (L1, L2, L3, L4) distinctes l'une de l'autre ; et
- au moins un entre le premier et le second bras de cavalier (12A, 12B ; 13A, 13B) s'étend dans un passage respectif défini dans lesdites couches conductrices (L1, L2, L3, L4) pour se connecter à la partie d'extrémité libre (11F) respective ;
dans lequel lesdites couches conductrices (L1, L2, L3, L4) incluent un premier ensemble de parties d'extrémité libres (11F) courbées de manière circonférentielle par un premier pas et un second ensemble de parties d'extrémité libres (11F) courbées de manière circonférentielle par un second pas différent du premier pas.

2. Stator (1) selon la revendication 1, dans lequel également l'autre entre le premier et le second bras de cavalier (12A, 12B ; 13A, 13B) s'étend dans un passage respectif défini dans lesdites couches conductrices (L1, L2, L3, L4) pour se connecter à la partie d'extrémité libre (11F) respective.

3. Stator (1) selon la revendication 2, dans lequel lesdites couches conductrices (L1, L2, L3, L4) comprennent, consécutivement et en partant de ladite couche d'extrémité radialement externe (L1) jusqu'à ladite couche d'extrémité radialement interne (L4), une première (L1), une deuxième (L2), une troisième (L3) et une quatrième (L4) couches conductrices circulaires et dans lequel la partie d'extrémité libre (11F) à laquelle le premier bras de cavalier (12A ; 13A) est connecté appartient à l'une entre lesdites deuxième et troisième couches (L2, L3) et la partie d'extrémité libre (11F) à laquelle le second bras de cavalier (12B, 13B) est connecté appartient à l'autre entre lesdites deuxième et troisième couches (L2, L3).

4. Stator (1) selon l'une quelconque des revendications précédentes, dans lequel au moins l'une desdites couches conductrices (L1, L2, L3, L4) comprend un groupe de parties d'extrémité libres (11F) courbées par ledit premier pas qui sont agencées de manière consécutive et circonférentielle adjacentes les unes aux autres ; le cavalier dudit premier type (12 ; 13) tournant autour dudit groupe de parties d'extrémité libres (11F) et lesdites parties d'extrémité libres (11F) auxquelles le premier et le second bras de cavalier (12A, 12B ; 13A, 13B) sont connectés étant courbées par ledit second pas.

5. Stator (1) selon la revendication 4, dans lequel les conducteurs spéciaux (12, 13, 14, 15, 16, 17) comprennent en outre une borne de phase (17) insérée dans lesdites encoches de stator (5) et ayant une partie d'extrémité de borne de phase (17F) qui fait saillie de la seconde face (4) du stator, le cavalier du premier type (12 ; 13) tournant également autour de la partie d'extrémité de borne de phase (17F) et au moins un entre le premier et le second bras de cavalier (12A, 12B ; 13A, 13B) ayant une partie d'extrémité de bras de cavalier (12F) respective qui est courbée pour passer autour de ladite partie d'extrémité de borne de phase (17F) et pour se connecter à la partie d'extrémité libre (11F) respective.

6. Stator (1) selon l'une quelconque des revendications précédentes, comprenant une pluralité de cavaliers dudit premier type (12 ; 13).

7. Stator (1) selon l'une quelconque des revendications précédentes, dans lequel les conducteurs spéciaux (12, 13, 14, 15, 16, 17) comprennent une pluralité de cavaliers d'un second type (14 ; 15) qui sont agencés sur un côté de l'enroulement de barre (10) radialement opposé par rapport à celui du cavalier du premier type (12 ; 13),
dans lequel chaque cavalier du second type (14 ; 15) a deux bras de cavalier (14A, 14B ; 15A, 15B) et une partie de connexion de cavalier (14C ; 15C) entre lesdits bras de cavalier (14A, 14B ; 15A, 15B), les deux bras de cavalier (14A, 14B ; 15A, 15B) de chaque cavalier du second type (14 ; 15) étant respectivement connectés à deux desdites parties d'extrémité libres (11F) qui appartiennent à une même couche de ladite pluralité de couches (L1, L2, L3, L4), et
dans lequel les cavaliers du second type (14 ; 15) de ladite pluralité sont agencés croisés les uns par rapport aux autres.

8. Machine électrique comprenant un stator (1) tel que défini dans l'une quelconque des revendications précédentes.

9. Véhicule à propulsion électrique ou hybride comprenant un stator (1) tel que défini dans l'une quelconque des revendications précédentes ou une machine électrique telle que définie dans la revendication 8.
